# EUROPEAN PATENT APPLICATION

(11) **EP 2 966 710 A1**
(43) Date of publication of application: **13.01.2016**
(21) Application number: 14176102.3
(22) Date of filing: 08.07.2014
(51) Int. Cl.: H01M 4/36, C01B 33/02, H01M 4/38, H01M 4/134

(54) **A plurality of silicon domains and the use thereof, a composite particle made thereof, and an electrode for a battery**

(71) Applicant: Umicore SA, 1000 Brussels (BE)
(72) Inventor: Driesen, Kris, 2250 Olen (BE); Marx, Nicolas, 2250 Olen (BE); van Genechten, Dirk, 2250 Olen (BE); Put, Stijn, 2250 Olen (BE)
(74) Representative: Knockaert, Guy

(57) **Abstract**

A plurality of silicon domains having a size distribution with a d₁₀, a d₅₀ and a d₉₀, whereby d₅₀ is 500nm or less and the ratio (d₉₀-d₁₀)/d₅₀ is 2.8 or less, either separately or in a composite particle with a Li-ion and electron conducting matrix.

## Description

The present invention relates to a plurality of silicon domains, a composite particle made thereof, an electrode for a battery, in particular for a lithium-ion battery, and the use of such a plurality of silicon domains.

### BACKGROUND

Lithium ion (Li-ion) batteries are currently the best performing batteries and already became the standard for portable electronic devices. In addition, these batteries already penetrated and rapidly gain ground in other industries such as automotive and electrical storage. Enabling advantages of such batteries are a high energy density combined with a good power performance.

A Li-ion battery typically contains a number of so-called Li-ion cells, which in turn contain a positive (cathode) electrode, a negative (anode) electrode and a separator which are immersed in an electrolyte. The most frequently used Li-ion cells for portable applications are developed using electrochemically active materials such as lithium cobalt oxide (LCO) or lithium nickel manganese cobalt oxide (NMC) for the cathode and a natural or artificial graphite for the anode.

It is known that one of the important limitative factors influencing batteries' performance and in particular batteries' energy density is the anode's active material. Therefore, to improve the energy density, newer electrochemically active materials based on e.g. tin (Sn), aluminum (Al) and silicon (Si) were investigated and developed during the last decade, such developments being mostly based on the principle of alloying said active material with Li during Li incorporation therein during use.

The best candidate seems to be Si as theoretical capacities of 3579mAh/g (gravimetric) or 2200mAh/cm³ (volumetric) can be obtained and these capacities are far larger than that of graphite (372mAh/g) but also those of other candidates.

However, one drawback of using a Si-based electrochemically active material in an anode is its large volume expansion during charging, which is as high as 270% when the lithium ions are incorporated, e.g. by alloying or intercalation, in the anode's active material - a process often called lithiation. The large volume expansion of the Si-based materials during Li incorporation may induce stresses in the Si, which in turn could lead to a mechanical degradation of the Si material.

Repeated periodically during charging and discharging of the Li-ion battery, the repetitive mechanical degradation of the Si electrochemically active material may reduce the life of a battery to an unacceptable level.

In an attempt to alleviate the deleterious effects of the Si's volume change, many research studies showed that by pulverizing the Si material into submicron or nano-sized Si domains, typically with an average domain size smaller than 500nm preferably smaller than 200nm, and more preferably smaller than 150nm, and using these as the electrochemically active material may prove a viable solution.

In order to accommodate the volume change, and to avoid direct physical contact between the electrolyte in a battery and Si, the Si domains are usually used as composite particles in which the Si domains are embedded in a matrix material.

Several types of such Si-domain containing composite particles are known. These are
- so called SiOₓ particles, whereby overall x = typically 0.6-1.1. From investigations it has become apparent that this overall formula mainly consists of Si domains in a SiO₂ matrix. Such composite particles are formed by gas phase nucleation.
- Si-alloy, in which the other metals in the alloy form the matrix material and preferably are one or more metals of the group consisting of Sn, Ti, Fe, Ni, Cu, Co and Al. Such alloys are typically formed by mechanical alloying, during which submicron or nanometer sized Si domains are formed.
- Carbon-based composites, in which a separately produced Si nano powder is agglomerated with separately produced crystalline or amorphous carbon. In this case the Si domains are formed by the actual discrete Si particles from the Si nano powder.

A disadvantage of the present products for Si based electrodes is that they still suffer from the effects of Si-swelling, reducing the battery storage capacity relatively quickly over time, thus limiting the lifetime, and limiting the volumetric storage capacity by only allowing a relatively low volumetric Si content in the electrode.
A further disadvantage is that inhomogeneous behaviour is possible of a certain Si domain compared to another Si domain.

Therefore, despite the advancements in the art of negative electrodes and electrochemically active materials contained therein, there is still a need for yet better electrodes that have the ability to further optimize the performance of Li-ion batteries. In particular, for most applications, negative electrodes having improved capacities and coulombic efficiencies are desirable.

### SUMMARY OF THE INVENTION

Therefore, it is a goal of the present invention to improve the capacity and lifetime of batteries by improving the electrochemically active Si domains.

Therefore, the invention provides for a plurality of silicon domains having a size distribution with a d₁₀, a d₅₀ and a d₉₀, whereby d₅₀ is 500nm or less and the ratio (d₉₀-d₁₀)/d₅₀ is 2.8 or less.

By a silicon domain is meant an identifiable cluster of silicon atoms either in a matrix or alone, with a discrete boundary with the surrounding material.

In practice, such a Si domain can be either a cluster of Si atoms, in other words a grain of Si, in a matrix made from different material, or a discrete Si particle. In the latter case, a plurality of such Si particles is also referred to as a Si powder.

The Si domains are essentially non-oxidised Si, even though they may be slightly oxidised, especially at their boundaries. Typically they contain less than 15% by weight oxygen, preferably less than 10%. The Si domains may, besides oxygen, contain further elements, such as intentionally added dopants or impurities that are non-intentional.

Such further elements are typically present at a level of 15% or less, preferably 10% or less, more preferably 5% or less expressed as a percentage of Si excluding oxygen. Typically the silicon domains are covered with a SiOₓ layer, with 0 < x ≤ 2, and with a thickness of at most 10nm.

Throughout this document the size distribution is a weight-based or volume-based size distribution.

The d₁₀ value is defined as the size of a silicon domain corresponding to 10 weight% cumulative undersize domain size distribution. In other words, if the silicon domain size d₁₀ is 50nm, 10% of the total weight of domains in the tested sample are smaller than 50nm.

Analogously, d₅₀ is the domain size compared to which 50% of the total weight of domains is smaller and d₉₀ is the domain size compared to which 90% of the total weight of domains is smaller.

In the case that the plurality of Si domains is a powder, so the Si domains are individual loose particles, such size distribution may be simply determined by laser diffraction. As is well known to the skilled person, particular care has to be taken to deagglomerate agglomerates in order to reliably determine the domain size.

Alternatively, such a size distribution may be determined optically from SEM and/or TEM images by measuring at least 200 silicon domains. This method is appropriate if the silicon domains are present in a matrix from which they cannot be separated, but may also be used for a Si powder.

It should be noted that by domain is meant the smallest discrete domain that can be determined optically from SEM or TEM images. Domains may have any shape, e.g. substantially spherical but also whiskers, rods, plates, fibers and needles.

The size of a Si domain is then determined as the largest measurable line distance between two points on the periphery of the domain. This periphery of the domain is determined as the boundary of the domain with a composite matrix material, with a different Si domain, with the atmosphere or with an auxiliary matrix material used during image taking.

Such an optical method will give a number-based domain size distribution, which can be readily converted to a weight based size distribution via well-known mathematical equations.

Aggregates of Si domains may be formed during their synthesis. In the context of this invention, an aggregate is to be understood as a group of domains which are coalesced together in a structure with such an intergrowth degree that said structure can be divided into the individual domains only partially, if at all.

The degree of intergrowth of the aggregates can be influenced by the parameters of the synthesis process of forming said domains which for example, during their formation coalesce and grow subsequently together to form the aggregates.

Thus a characteristic of an aggregate may be that when attempting to divide it into individual constituent domains, destruction of some or all of the domains will occur.

For simplicity, the definition of domains in accordance with the present invention also includes aggregates of domains which are fused together so that they may not be separated without risk of destruction of the domains.

The domains may also agglomerate due to van der Waals forces and other electromagnetic forces acting between them to form agglomerates. In contrast to the aggregates, agglomerates are understood in the context of this invention as meaning only a loose association of domains which can readily disintegrate into the constituent domains and are not considered as domains in their own right.

The inventors have discovered that a narrow size distribution, as quantified by the mentioned ratio and value therefore, when used in an electrode of a battery, leads to improved battery performance, in particular an improved capacity retention, so a reduction in capacity loss during long term use with repeated cycles, and a reduction of capacity loss during cycling as expressed by the coulombic efficiency, which is the ratio between the total amount of silicon inserted and the total amount of lithium extracted during a cycle.

In particular it was noticed that this plurality of Si domains, when used in an electrode may be less affected by mechanical stresses generated during charge/discharge cycles.

Speculatively this may be attributed to a more homogeneous behaviour of the Si domains, with a reduced probability of larger domains fracturing.

Further, a more homogeneous electrode swelling may be obtained during lithiation/de-lithiation, e.g. the homogeneity of the density of the electrode, and a more uniform thickness. A plurality of domains with a broad span may result in inhomogeneous electrode swelling resulting in crack formation of the composite particle and/or resulting in inhomogeneous anode expansions during battery testing.

Yet another advantage of having a narrow domain size distribution may be that a narrow size distribution will increase the mechanical stability of the electrode as the smaller domains are usually lithiated first and may therefore be more subjected to mechanical stress during continuous cycling. Larger domains may be sometimes not even completely charge especially when using high currents.

Additionally, it is well known in particle technology that a size difference may lead to size-based segregation during processing, so that inhomogeneity may be is automatically created during processing. With a narrow size distribution of Si domains this tendency will naturally be reduced, increasing end product homogeneity.

In preferred embodiments the ratio (d₉₀-d₁₀)/d₅₀ is 2.5 or less, 2.0 or less or 1.6 or less, to obtain the mentioned effects to a larger degree.

In further preferred embodiments d₅₀ is 250nm or less, preferably 150nm or less, and more preferably 100nm or less. It was observed that this way the capacity retention in the final battery can be further improved.

In a further preferred embodiment the silicon domains are particles, so the plurality of silicon domains is a Si powder, either on its own or agglomerated with another powder.

In an alternative embodiment the silicon domains are grains or clusters of Si embedded in another material, without ever having been individual particles separate from the other material.

The invention further concerns a composite particle comprising a plurality of silicon domains according to the invention explained above, further comprising a matrix in which the silicon domains are embedded, whereby the matrix is Li-ion conductive and electron conductive.

For the avoidance of any doubt it is noted that the composite particle contains no further silicon domains other than those making up the plurality of Si domains. In other words, all Si domains in the composite particle are considered to form part of the aforementioned plurality of Si domains.

Such particles are particularly useful for the preparation of negative electrodes of Li ion batteries as they are directly useable to form such a negative electrode.

In a preferred embodiment of the composite particle the plurality of silicon domains forms between 4% and 50% by weight of the composite particle and the matrix forms between 30% and 96% by weight of the composite particle, whereby the plurality of silicon domains and the matrix together form at least 75%, preferably at least 85%, by weight of the composite particle.

The invention further concerns a powder which is at least mainly, meaning 50 weight% or more and preferably 90 weight% or more, formed from such composite particles according to the inventions, whereby the weight averaged particle size of said powder is between 1 and 20µm.

The invention further concerns an electrode for a battery for the storage of electrical energy, whereby the electrode comprises a plurality of silicon domains according to the invention or a powder of composite particles according to the invention.

The invention further concerns the use of a plurality of silicon domains according to the invention in a battery for the storage of electrical energy.

### DETAILED DESCRIPTION OF THE INVENTION

A preferred method to manufacture plurality of silicon domains according to the invention the steps of: (i) providing an initial powder containing Si-based primary particles and aggregates thereof, which powder has a wide Si domain size distribution (ii) subjecting said initial powder to a de-agglomeration process to separate any agglomerate that may be present into primary particles; and (iii) subjecting the de-agglomerated initial powder to a size segregation step to obtain a plurality of Si domains, more precisely a powder consisting of Si particles, according to the invention.

Electrochemically active composite particles, meaning that said composite particles can incorporate, store and release lithium ions during battery's charge and discharge cycles may be made from such a plurality of Si domains in combination with a lithium ion-conductive and electron conductive material. A range of materials have been found to be sufficiently conductive to lithium and electrons, including oxides (e.g., copper oxide), polymers (e.g. sulfonated conductive polymer), polymeric carbons, amorphous and crystalline carbons, meso-phase carbon and combinations thereof. Suitable C-based materials include amorphous carbon; crystalline carbon, e.g. graphite, graphene; carbonizable precursor materials and combinations thereof

The lithium ion-conductive material can form a coating or a succession of coatings onto the Si-based domains and/or agglomerates containing these. The coatings may cover said domains completely or partially.

The lithium ion-conductive material can also form a matrix with the Si-domains being dispersed therein, said matrix being in a particulate or a non-particulate form.

Such electrochemically active composite particle may be made into an electrode by depositing a layer of them, with the use of processing aids as known in the art, on a conductive support. The layer can be deposited with any techniques, e.g. bar coating, screen printing, knife coating, roller coating, spin coating and the like. The thickness of the layer varies with the geometry of the cell or battery and typically ranges from a few microns to several millimetres.

The invention will be further explained with the help of the following Examples and Counterexamples, without however being limited thereto.

### Counterexample 1

A silicon powder is prepared using plasma technology as described in Example 1 of WO 2012/000858, introduced herein in its entirety by reference. The process parameters, i.e. the RF power, flow of argon gas, injection rate of Si precursor, temperature in the reaction zone, quenching gas's temperature and flow, were adjusted to obtain a powder having domains, in other words particles, with a certain size distribution as characterised by d₁₀, d₅₀ and d₉₀ values as shown in table 1.

### Example 1

A 5wt% dispersion of the powder of counterexample 1 in water was prepared using ultrasound to break up agglomerates. After the ultrasound treatment the dispersion was filtered using a Cuno Micro-klean-G filter with a nominal pore size of 1 micron filter. The water was removed by lyophilisation: the dispersion was solidified by injecting it in liquid nitrogen at -195°C and the water was then evaporated at -20°C under reduced pressure.

A powder was obtained having domains, in other words particles, with a size distribution as characterised by d₁₀, d₅₀ and d₉₀ values as shown in table 1.

### Counterexample 2

Counterexample 1 was repeated with different manufacturing parameters leading to a powder with a domain size distribution, in other words particle size distribution, as characterised by d₁₀, d₅₀ and d₉₀ values as shown in table 1.

### EXAMPLE 2

The procedure used in Example 1 was used starting from the powder of counterexample 2. A powder was obtained with a domain size distribution, in other words particle size distribution, as characterised by d₁₀, d₅₀ and d₉₀ values as shown in table 1.

The particles size distributions were determined, for the silicon powders in the examples and the counterexamples by the following method.
0.5g of Si powder 99.50g of demineralised water were mixed and dispersed by means of an ultrasound probe for 2min @ 225 W.

The size distributions were determined on a Malvern Mastersizer 2000, using ultrasound during the measurement, using a refractive index for Si of 3.5 and an absorption coefficient of 0.1 and ensuring that the detection threshold was between 5 and 15%.

The oxygen contents of the silicon powders in the examples and the counterexamples were determined as well and are reported in the table. They were determined by the following method:
The total oxygen content of silicon powders was determined with a Leco TC600 oxygen-nitrogen analyzer. The sample was put in a closed tin capsule that was put itself in a nickel basket. The basket was put in a graphite crucible and heated under helium as carrier gas to above 2000°C.
The sample thereby melts and oxygen reacts with the graphite from the crucible to CO or CO₂ gas. These gases are guided into an infrared measuring cell. The observed signal is recalculated to an oxygen content.

### Manufacture of composite powders

The Si powders produced in counterexamples 1 and 2 and examples 1 and 2 were each processed further as follows:
20 g of a polyvinyl chloride (PVC) from Acros was dissolved in 200 mL THF. A Si powder and graphite were added in amounts of 1.5 g and 10 g respectively and mixed in. The THF solvent was evaporated using rotavap and the PVC containing all components was dried in an oven at 80°C. The dried sample was fired at 600°C for 1h and subsequently at 800°C for 2h in a tube furnace under Argon. The obtained products were further pulverized using a mortar.

Four composite powders, each based on one of the four mentioned Si powders, were obtained this way, mainly consisting of carbon and Si, with circa 9% Si.

### Electrode manufacture

To make electrodes all powders were sieved using a 45µm sieve and mixed with carbon black (C64 Timcal), carbon fibers (VGCF ShowaDenko) and sodium carboxymethyl cellulose binder (ACROS) in water (2.5wt%). The ratio used was 90 weight parts composite powder/ 3 weight parts carbon black/ 2 weight parts carbon fibres and 5 weight parts binder.

These components were mixed in a Pulverisette 7 planetary ball mill in two stages of 10 minutes at 500 rpm.

A copper foil cleaned with ethanol was used as current collector. A 125µm thick layer was coated on the copper foil. The coating was dried for 45 minutes in vacuum at 50°C. A 1.27 cm² circle was punched from the dried coated copper foil and used as an electrode in a coin cell using lithium metal as counter electrode. The electrolyte was EC/DC 1/1 + 2%VC + 10% FEC. All samples were tested in a coin-cell tester with high precision (Maccor 4000 series).

The capacity in the 9^{th} cycle, the coulombic efficiency in the 9^{th} cycle and the coulombic efficiency in the first cycle were determined. The skilled person will be aware that a small change in coulombic efficiency per cycle, will have, over the hundreds or thousands of charging-discharging cycles a battery is expected last, a significant cumulative effect.

The results are given in table 1. These show a reduction in coulombic efficiency loss which is 6% improved when comparing example 1 with counterexample 1, and 9% improved when comparing example 2 with counterexample 2. These results further show an increase of 20% in the capacity when comparing example 1 with counterexample 1 and of 12% when comparing example 2 with counterexample 2.

**Table 1**

| | Powder properties | | | | | Properties after making composite powder and electrode | | |
|---|---|---|---|---|---|---|---|---|
| | Oxygen content | d₁₀ | d₅₀ | d₉₀ | (d₉₀-d₁₀)/ d₅₀ | Coulombic efficiency in 1^{st} cycle | Coulombic efficiency in 9^{th} cycle | Capacity after 9^{th} cycle |
| | % | nm | nm | nm | | % | % | mAh/g |
| Counter-example1 | 0.75 | 74 | 179 | 611 | 3.0 | 79.5 | 99.15 | 515 |
| Example 1 | 1.2 | 69 | 154 | 449 | 2.5 | 81.8 | 99.20 | 620 |
| Counterexample2 | 0.81 | 183 | 442 | 3213 | 9.9 | 83.3 | 99.03 | 514 |
| Example 2 | 0.82 | 184 | 339 | 770 | 1.7 | 84.5 | 99.11 | 576 |

## Claims

1. A plurality of silicon domains having a size distribution with a d₁₀, a d₅₀ and a d₉₀, whereby d₅₀ is 500nm or less and the ratio (d₉₀-d₁₀)/d₅₀ is 2.8 or less.

2. A plurality of silicon domains according to claim 1, whereby the ratio (d₉₀-d₁₀)/d₅₀ is 2.5 or less.

3. A plurality of silicon domains according to claim 2, whereby the ratio (d₉₀-d₁₀)/d₅₀ is 1.6 or less.

4. A plurality of silicon domains according to any of the previous claims, whereby d₅₀ is 200nm or less

5. A plurality of silicon domains according to any of the previous claims, whereby the oxygen content of the plurality of silicon domains is at most 10% by weight.

6. A plurality of silicon domains according to any of the previous claims, whereby the silicon domains are particles.

7. A plurality of silicon domains according to any of the previous claims, whereby the silicon particles are covered with an SiOₓ layer, with 0 < x ≤ 2, and with a thickness of at most 10nm.

8. A plurality of silicon domains according to any of claims 1 to 6, whereby the silicon domains are grains.

9. A composite particle comprising a plurality of silicon domains according to any of the previous claims and further comprising a matrix in which the silicon domains are embedded, whereby the matrix is Li-ion conductive and electron conductive.

10. A composite particle according to claim 9, whereby the plurality of silicon domains forms between 4% and 50% by weight of the composite particle and the matrix forms between 30% and 96% by weight of the composite particle.

11. A composite particle according to claim 9 or 10, whereby the plurality of silicon domains and the matrix together form at least 75% by weight of the composite particle.

12. A composite particle according to any of claims 9 to 11, whereby the plurality of silicon domains is a plurality of silicon domains according to claim 6 or 7, whereby the matrix is formed from a mixture of a matrix powder and a thermally decomposed liquid or solution, whereby the silicon particles and the matrix are aggregated.

13. A powder which is at least mainly formed from composite particles according to any of claims 9 to 12, whereby the average particle size of said powder is between 1 and 20 micrometre.

14. An electrode for a battery for the storage of electrical energy, whereby the electrode comprises a plurality of silicon domains according to any of claims 1 to 8 or a powder according to claim 13.

15. Use of a plurality of silicon domains according to any of claims 1 to 8 in a battery for the storage of electrical energy.
